# FASCICULE DE BREVET EUROPEEN

(11) **EP 2 137 878 B1**
(45) Date de publication et mention de la délivrance du brevet: **17.10.2018**
(21) Numéro de dépôt: 08787809.6
(22) Date de dépôt: 18.03.2008
(51) Int. Cl.: H04L 12/18

(54) **DISPOSITIF ET PROCÉDÉ DE GESTION DE LA DIFFUSION DYNAMIQUE DE CONTENUS MULTIMEDIA AU MOYEN D'IDENTIFIANTS DE CONTENUS ET D'IDENTIFIANTS DE DIFFUSION**
VORRICHTUNG ZUR HANDHABUNG DER DYNAMISCHEN VERTEILUNG VON MULTIMEDIAINHALTEN MITTELS INHALTSIDENTIFIKATOREN UND VERTEILUNGSIDENTIFIKATOREN
DEVICE FOR MANAGING THE DYNAMIC DISTRIBUTION OF MULTIMEDIA CONTENT USING CONTENT IDENTIFIERS AND DISTRIBUTION IDENTIFIERS

(30) Priorité: 23.03.2007 FR 0702129
(43) Date de publication de la demande: 30.12.2009
(73) Titulaire: Mirane, 33150 Cenon (FR)
(72) Inventeur: MICHEL, Cyril, F-33000 BORDEAUX (FR); GAROSI, Olivier, F-33700 Merignac (FR)
(74) Mandataire: Plaçais, Jean Yves
(86) Numéro de dépôt international: PCT/FR2008/000355
(87) Numéro de publication internationale: WO 2008/135648

(56) Documents cités:
- EP-A- 1 718 097
- EP-A1- 1 435 742
- WO-A-99/31871
- WO-A-2006/086059
- WO-A2-2005/109814

## Description

L'invention concerne le domaine de la diffusion de contenus multimédia par des équipements de diffusion qui sont connectés à un réseau de communication adapté à la transmission de données de contenus multimédia, et plus précisément la gestion d'une telle diffusion.

On entend ici par « équipement de diffusion » un équipement électronique disposant d'un module de communication permettant de le connecter à un réseau de communication (filaire ou non filaire), d'un lecteur de contenus multimédia et de moyens de diffusion des contenus multimédia lus (ou joués) par le lecteur, comme par exemple un écran ou plus généralement un appareil permettant de diffuser des images (écran plat, vidéo-projecteur, rétro-projecteur, mur d'images, et analogues) et que l'on appellera « système de visualisation », et/ou des haut-parleurs (ou tout autre moyen de diffusion sonore).

Comme le sait l'homme de l'art, certains dispositifs de gestion, souvent appelés outils de Communication et d'Affichage Dynamique (CAD), permettent de transmettre des contenus multimédia choisis vers un grand nombre d'équipements de diffusion, connectés à un réseau (de communication). Cette transmission se fait généralement en mode diffusion (ou « broadcast » ou encore point-à-multipoints), c'est-à-dire d'un serveur de contenus vers un ensemble d'équipements de diffusion, en fonction d'une programmation de contenus et d'instants de diffusion de ces contenus définis par un administrateur.

Lorsque de nombreux clients requièrent des séquences différentes, ou lorsqu'un client requiert des séquences différentes pour des groupes d'équipements différents, la transmission des différentes séquences monopolise une quantité importante de bande passante au niveau du réseau. La quantité de bande passante monopolisée est encore plus importante lorsque des séquences différentes doivent être diffusées par des équipements de diffusion qui sont implantés dans un même local mais à des emplacements différents, comme par exemple derrière une vitrine et dans une zone de circulation ou d'attente à l'intérieur d'un local (tel qu'un magasin ou un point d'information).

Par ailleurs, plus le nombre de séquences différentes à diffuser est important, plus les opérations de programmation des séquences deviennent nombreuses et complexes pour l'administrateur de diffusion.

Les documents WO2006/086059A, EP1718097A, EP 1 435 742 A et WO 99/31871A décrivent des dispositifs et procédés visant à limiter la consommation de bande passante dans le cadre de la multidiffusion.

L'invention a donc pour but de proposer un dispositif de gestion de diffusion de contenus multimédia permettant de réduire la quantité de bande passante monopolisée par la transmission des séquences et/ou de simplifier la tâche de l'administrateur de diffusion.

Elle propose à cet effet un dispositif comme celui revendiqué dans la revendication 1 dédié à la gestion de la diffusion de contenus multimédia par des équipements de diffusion qui sont connectés à un réseau de communication (adapté à la transmission de données de contenus multimédia), et destiné à faire partie d'un équipement de gestion, comme par exemple un serveur de contenus multimédia, également connecté au réseau de communication.

Ce dispositif se caractérise par le fait qu'il comprend des moyens de gestion chargés, d'une part, d'associer des groupes d'au moins un identifiant de diffusion à des contenus multimédia à diffuser, et d'autre part, d'affecter à certains au moins des équipements de diffusion au moins l'un des groupes d'identifiant(s) de diffusion. Ainsi, chaque équipement de diffusion ne diffuse que chaque contenu multimédia qui est associé à un groupe d'identifiant(s) de diffusion qui est identique à un groupe d'identifiant(s) de diffusion qui lui a été affecté. Des moyens de programmation sont chargés, d'une part, de sélectionner pour chaque équipement de diffusion chaque contenu multimédia qui est associé à un groupe d'identifiant(s) de diffusion identique à un groupe d'identifiant(s) de diffusion qui lui a été affecté, et d'autre part, d'ordonner la transmission vers chaque équipement de diffusion, à des instants programmés à l'avance, de chaque contenu multimédia sélectionné pour lui, afin qu'il le diffuse (immédiatement ou plus tard).

Le dispositif selon l'invention peut comporter d'autres caractéristiques qui peuvent être prises séparément ou en combinaison, et notamment :
- les moyens de gestion peuvent par exemple constituer une table de correspondance entre des identifiants de contenus multimédia et des groupes d'identifiant(s) de diffusion. Dans ce cas, les moyens de programmation peuvent être chargés, d'une part, de sélectionner pour chaque équipement de diffusion chaque contenu multimédia dont l'identifiant de contenu est stocké dans la table en correspondance d'un groupe d'identifiant(s) de diffusion qui est identique à un groupe d'identifiant(s) de diffusion qui lui a été affecté, et d'autre part, d'ordonner la transmission vers chaque équipement de diffusion, à des instants programmés à l'avance, de chaque contenu multimédia sélectionné pour lui, afin qu'il le diffuse ;
- certains identifiants de diffusion peuvent être associés à des contenus multimédia, dits de base, qui doivent être diffusés par défaut par un équipement de diffusion qui n'a pas fait l'objet d'une affectation de groupe d'identifiant(s) de diffusion ;
- chaque identifiant de diffusion peut par exemple être représentatif d'une « valeur » qui est choisie parmi un ensemble de valeurs pouvant être prises par un critère, comme par exemple et non limitativement la zone géographique d'implantation d'un équipement de diffusion et le positionnement dans une vitrine des moyens de diffusion d'un équipement de diffusion ;
- certains au moins des contenus multimédia (associés à un groupe d'identifiant(s) de diffusion) peuvent être destinés à être diffusés par un équipement de diffusion consécutivement à une interaction homme/machine ;
- les moyens de programmation peuvent être chargés de constituer des séquences de contenus multimédia à diffuser qui comprennent chacune au moins un contenu multimédia associé à un groupe d'identifiant(s) de diffusion et au moins un contenu multimédia non associé à un groupe d'identifiant(s) de diffusion, ce dernier contenu multimédia étant destiné à être obligatoirement diffusé par chaque équipement de diffusion qui le reçoit.

L'invention propose également un procédé comme celui de la revendication 8 dédié à la gestion de la diffusion de contenus multimédia par des équipements de diffusion (EDi) connectés à un réseau de communication, et consistant :
- à associer des groupes d'au moins un identifiant de diffusion à des contenus multimédia à diffuser,
- à affecter à certains au moins des équipements de diffusion au moins l'un des groupes d'identifiant(s) de diffusion, et
- à diffuser au niveau d'un équipement de diffusion chaque contenu multimédia qui est associé à un groupe d'identifiant(s) de diffusion identique à un groupe d'identifiant(s) de diffusion qui lui a été affecté.

On peut sélectionner pour chaque équipement de diffusion chaque contenu multimédia qui est associé à un groupe d'identifiant(s) de diffusion identique à un groupe d'identifiant(s) de diffusion qui lui a été affecté, et on peut transmettre vers chaque équipement de diffusion, à des instants programmés à l'avance, chaque contenu multimédia sélectionné pour lui, afin qu'il le diffuse (immédiatement ou plus tard).

Le procédé selon l'invention peut comporter d'autres caractéristiques qui peuvent être prises séparément ou en combinaison, et notamment :
- on peut constituer une table de correspondance entre des identifiants de contenus multimédia et des groupes d'identifiant(s) de diffusion, et on peut sélectionner pour chaque équipement de diffusion chaque contenu multimédia dont l'identifiant de contenu est stocké dans la table en correspondance d'un groupe d'identifiant(s) de diffusion qui est identique à un groupe d'identifiant(s) de diffusion qui lui a été affecté. On peut ensuite transmettre vers chaque équipement de diffusion, à des instants programmés à l'avance, chaque contenu multimédia sélectionné pour lui, afin qu'il le diffuse ;
- on peut constituer des séquences de contenus multimédia à diffuser qui comprennent chacune au moins un contenu multimédia associé à un groupe d'identifiant(s) de diffusion et au moins un contenu multimédia non associé à un groupe d'identifiant(s) de diffusion, ce dernier contenu multimédia étant destiné à être obligatoirement diffusé par chaque équipement de diffusion qui le reçoit.

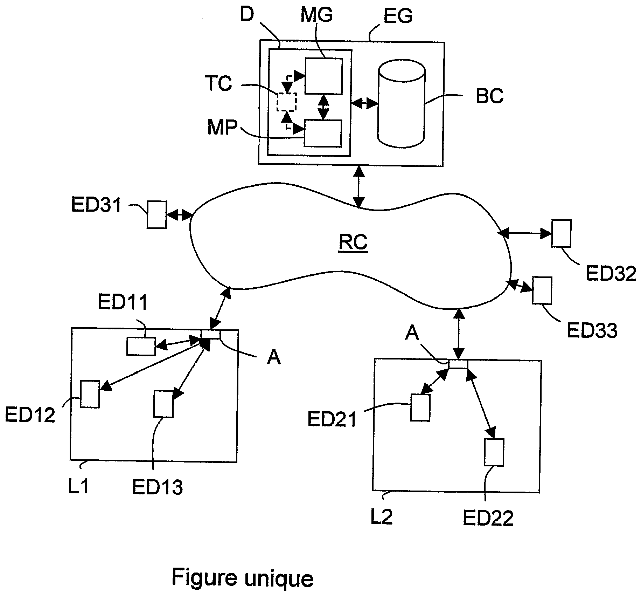

D'autres caractéristiques et avantages de l'invention apparaîtront à l'examen de la description détaillée ci-après, et du dessin annexé, sur lequel l'unique figure illustre de façon schématique et fonctionnelle un exemple d'installation de communication permettant de mettre en oeuvre l'invention.

Les dessins annexés pourront non seulement servir à compléter l'invention, mais aussi contribuer à sa définition, le cas échéant.

L'invention a pour objet d'offrir une gestion simplifiée bien que plus sophistiquée de la diffusion de contenus multimédia par des équipements de diffusion connectés à un réseau de communication.

Dans ce qui suit, on considère, à titre d'exemple illustratif et non limitatif, que le réseau de communication est un réseau filaire à haut débit, comme par exemple un réseau câblé ou un réseau téléphonique de type xDSL. Mais, l'invention concerne tout type de réseau de communication capable de transmettre en mode point-à-multipoints (ou « broadcast » - diffusion) et point-à-point (ou « unicast ») des données définissant des contenus multimédia. Elle concerne donc également les réseaux de communication non filaire (ou radio), comme par exemple les réseaux de téléphonie mobile ou cellulaire (GSM/GPRS, EDGE, UMTS, CDMA2000 et leurs extensions et équivalents), les réseaux locaux sans fil (standards WLAN (« Wireless Local Area Network » - IEEE 802.11, Wi-Fi, Wi-Fi MIMO, ETSI HiperLAN/2), Bluetooth (IEEE 802.15), WiMAX (IEEE 802.16, ETSI HiperMAN), CPRS et Zigbee), et les réseaux satellitaires.

L'invention propose également un procédé dédié à la gestion de la diffusion de contenus multimédia par des équipements de diffusion (EDi) connectés à un réseau de communication, et consistant :
- à associer des groupes d'au moins un identifiant de diffusion à des contenus multimédia à diffuser,
- à affecter à certains au moins des équipements de diffusion au moins l'un des groupes d'identifiant(s) de diffusion, et
- à diffuser au niveau d'un équipement de diffusion chaque contenu multimédia qui est associé à un groupe d'identifiant(s) de diffusion identique à un groupe d'identifiant(s) de diffusion qui lui a été affecté.

Le procédé selon l'invention peut comporter d'autres caractéristiques qui peuvent être prises séparément ou en combinaison, et notamment :
- dans un premier exemple de réalisation, on peut transmettre à des instants programmés à l'avance une partie au moins des contenus multimédia à destination d'au moins une partie des équipements de diffusion, et à réception de ces contenus multimédia, chaque équipement de diffusion sélectionne chaque contenu multimédia qui est associé à un groupe d'identifiant(s) de diffusion identique à un groupe d'identifiant(s) de diffusion qui lui a été affecté afin de le diffuser (immédiatement ou plus tard) ;
- on peut adjoindre un groupe d'identifiant(s) de diffusion aux données qui définissent chaque contenu multimédia, afin que le contenu multimédia et le groupe d'identifiant(s) de diffusion adjoint constituent un ensemble de données propre à être transmis à des équipements de diffusion. Dans ce cas, on peut sélectionner dans chaque équipement de diffusion, en vue de le diffuser, chaque contenu multimédia qui est contenu dans un ensemble reçu contenant un groupe d'identifiant(s) de diffusion identique à un groupe d'identifiant(s) de diffusion qui lui a été affecté ;
- dans une variante, on peut constituer une table de correspondance entre des identifiants de contenus multimédia et des groupes d'identifiant(s) de diffusion, et en cas de réception de contenus multimédia pourvus d'un identifiant de contenu et de la table de correspondance, on peut sélectionner dans chaque équipement de diffusion, en vue de le diffuser, chaque contenu multimédia reçu dont l'identifiant de contenu est stocké dans la table en correspondance d'un groupe d'identifiant(s) de diffusion qui est identique à un groupe d'identifiant(s) de diffusion qui lui a été affecté ;
- dans un second exemple de réalisation, on peut sélectionner pour chaque équipement de diffusion chaque contenu multimédia qui est associé à un groupe d'identifiant(s) de diffusion identique à un groupe d'identifiant(s) de diffusion qui lui a été affecté, et on peut transmettre vers chaque équipement de diffusion, à des instants programmés à l'avance, chaque contenu multimédia sélectionné pour lui, afin qu'il le diffuse (immédiatement ou plus tard) ;
- on peut constituer une table de correspondance entre des identifiants de contenus multimédia et des groupes d'identifiant(s) de diffusion, et on peut sélectionner pour chaque équipement de diffusion chaque contenu multimédia dont l'identifiant de contenu est stocké dans la table en correspondance d'un groupe d'identifiant(s) de diffusion qui est identique à un groupe d'identifiant(s) de diffusion qui lui a été affecté. On peut ensuite transmettre vers chaque équipement de diffusion, à des instants programmés à l'avance, chaque contenu multimédia sélectionné pour lui, afin qu'il le diffuse ;
- on peut constituer des séquences de contenus multimédia à diffuser qui comprennent chacune au moins un contenu multimédia associé à un groupe d'identifiant(s) de diffusion et au moins un contenu multimédia non associé à un groupe d'identifiant(s) de diffusion, ce dernier contenu multimédia étant destiné à être obligatoirement diffusé par chaque équipement de diffusion qui le reçoit.

D'autres caractéristiques et avantages de l'invention apparaîtront à l'examen de la description détaillée ci-après, et du dessin annexé, sur lequel l'unique figure illustre de façon schématique et fonctionnelle un exemple d'installation de communication permettant de mettre en oeuvre l'invention.

Les dessins annexés pourront non seulement servir à compléter l'invention, mais aussi contribuer à sa définition, le cas échéant.

L'invention a pour objet d'offrir une gestion simplifiée bien que plus sophistiquée de la diffusion de contenus multimédia par des équipements de diffusion connectés à un réseau de communication.

Dans ce qui suit, on considère, à titre d'exemple illustratif et non limitatif, que le réseau de communication est un réseau filaire à haut débit, comme par exemple un réseau câblé ou un réseau téléphonique de type xDSL. Mais, l'invention concerne tout type de réseau de communication capable de transmettre en mode point-à-multipoints (ou « broadcast » - diffusion) et point-à-point (ou « unicast ») des données définissant des contenus multimédia. Elle concerne donc également les réseaux de communication non filaire (ou radio), comme par exemple les réseaux de téléphonie mobile ou cellulaire (GSM/GPRS, EDGE, UMTS, CDMA2000 et leurs extensions et équivalents), les réseaux locaux sans fil (standards WLAN (« Wireless Local Area Network » - IEEE 802.11, Wi-Fi, Wi-Fi MIMO, ETSI HiperLAN/2), Bluetooth (IEEE 802.15), WiMAX (IEEE 802.16, ETSI HiperMAN), CPRS et Zigbee), et les réseaux satellitaires.

La mise en oeuvre de l'invention requiert une installation de communication, par exemple du type de celle qui est schématiquement illustrée sur l'unique figure. Une telle installation comprend au moins un équipement de gestion EG, pourvu d'un (ou couplé à un) dispositif de gestion de la diffusion de contenus multimédia D, des équipements de diffusion EDij et un réseau (de communication) RC auquel sont raccordés l'équipement de gestion EG et les équipements de diffusion EDij.

Chaque équipement de diffusion EDij est implanté dans un lieu et appartient à un client référencé par l'indice i (ici i = 1 à 3, mais il peut prendre n'importe quelle valeur entière supérieure ou égale à 1). Par ailleurs, chaque équipement de diffusion EDij comprend au moins un module de communication qui permet de le connecter au réseau de communication, directement ou indirectement via un commutateur (ou aiguilleur) A, un lecteur de contenus multimédia, interne ou externe (comme par exemple un équipement de réception tel qu'un décodeur ou plus généralement une Set-Top Box), et des moyens de diffusion des contenus multimédia qui sont lus (ou joués) par le lecteur, comme par exemple un écran, ou plus généralement un appareil permettant de diffuser des images (écran plat, vidéo-projecteur, rétro-projecteur, mur d'images, et analogues) et que l'on appellera « système de visualisation », et/ou des haut-parleurs (ou tout autre moyen de diffusion sonore).

Dans ce qui suit, on considère, à titre d'exemple illustratif et non limitatif, que les équipements de diffusion EDij sont des ensembles de télévision et/ou vidéo raccordés à une Set-Top Box, elle-même connectée au réseau RC. Mais, il pourrait également s'agir d'ordinateurs personnels (PC), éventuellement portables, ou bien de Set-Top Boxes raccordé(e)s à un ou plusieurs systèmes de visualisation.

Par ailleurs, dans l'exemple non limitatif illustré sur l'unique figure :
- un premier client (i = 1) dispose d'un local L1 (par exemple un magasin) dans lequel sont implantés trois équipements de diffusion ED1j (j = 1 à 3), deux ED11 et ED12 étant par exemple situés devant des vitrines, afin de diffuser des contenus multimédia visibles de l'extérieur, et le troisième ED13 étant situé dans une zone de circulation ou d'attente afin de diffuser des contenus multimédia visibles de l'intérieur,
- un second client (i = 2) dispose d'un local L2 (par exemple un point d'information) dans lequel sont implantés deux équipements de diffusion ED2j (j = 1 et 2), par exemple situés dans des lieux de passage afin de diffuser des contenus multimédia visibles de l'intérieur, et
- un troisième client (i = 3) dispose de trois locaux (par exemple des magasins) dans chacun desquels est implanté un équipement de diffusion ED3j (j = 1 à 3), par exemple installé dans une zone située près des caisses.

Un dispositif de gestion D selon l'invention comprend au moins un module de gestion MG chargé, d'une part, d'associer des groupes Gn d'au moins un identifiant de diffusion IDnm à des contenus multimédia Ck à diffuser, et d'autre part, d'affecter à certains au moins des équipements de diffusion EDij de clients au moins l'un des groupes Gn d'identifiant(s) de diffusion IDnm.

Les contenus multimédia Ck à transmettre sont par exemple stockés dans une base de données (ou une mémoire) de l'équipement de gestion EG.

Chaque identifiant de diffusion IDnm peut par exemple être représentatif d'une « valeur », pas forcément numérique, qui est choisie parmi l'ensemble de valeurs que peut prendre un critère CRn. L'indice n référence un critère, tandis que l'indice m référence l'une des valeurs d'un critère CRn. Tout type de critère peut être envisagé.

Ainsi, on peut utiliser un critère CR1 (n = 1) lié à la zone géographique dans laquelle est implanté un équipement de diffusion EDij. Dans ce cas, les valeurs prises par ce critère CR1 peuvent par exemple être « nord » (m = 1), « sud » (m = 2), « est » (m = 3) et « ouest » (m = 4). On aura alors ID11, ID12 ID13 et ID14 correspondant respectivement aux valeurs nord, sud, est et ouest du critère CR1 de zone géographique d'implantation.

On peut également utiliser un critère CR2 (n = 2) lié au positionnement dans une vitrine d'un local des moyens de diffusion d'un équipement de diffusion EDij. Dans ce cas, les valeurs prises par ce critère CR2 peuvent par exemple être « oui » (m = 1 - placement dans une vitrine) et « non » (m = 2 - placement hors d'une vitrine). On aura alors ID21 et ID22 correspondant respectivement aux valeurs oui et non du critère CR2 de positionnement dans un local.

On notera que certains identifiants de diffusion IDnm peuvent être associés spécifiquement à des contenus multimédia Ck, dits de base, qui sont destinés à être diffusés par défaut par tout équipement de diffusion EDij qui n'a pas fait l'objet d'une affectation de groupe Gn d'identifiant(s) de diffusion IDnm. En d'autres termes, si l'on n'a pas affecté un groupe Gn à un équipement de diffusion EDij, il ne diffuse que des contenus multimédia de base.

On notera également que certains au moins des contenus multimédia Ck (associés à un groupe Gn d'identifiant(s) de diffusion IDnm) peuvent être destinés à être diffusés par un équipement de diffusion EDij consécutivement à une interaction homme/machine, comme par exemple une action sur une touche de clavier ou sur une icône affichée sur l'écran (ou plus généralement son système de visualisation), par exemple au moyen d'une souris ou d'une pression digitale lorsque l'écran est de type sensitif). On reviendra plus loin sur cette possibilité d'interactivité offerte par l'invention.

Chaque client indique à l'administrateur chaque groupe d'au moins un critère CRn qu'il veut appliquer dans chaque groupe constitué d'au moins l'un de ses équipements de diffusion EDij. A cet effet, l'administrateur peut par exemple fournir à chaque client une liste de critères CRn commune à tous et les valeurs associées à chacun de ces critères CRn, ou bien chaque client peut utiliser ses propres critères CRn et ses propres valeurs associées à chacun de ses critères CRn. Le module de gestion MG effectue ses affectations de groupe Gn d'identifiant(s) de diffusion IDnm aux équipements de diffusion EDij des clients en fonction des indications (critère(s)/équipement(s)) fournies par ces derniers, par exemple via le réseau RC après renseignement de champs de saisie et/ou sélection dans des listes prédéfinies s'affichant sur des pages d'écran.

Grâce aux associations (contenu multimédia Ck / groupe Gn d'identifiant(s) de diffusion IDnm) et aux affectations (équipements de diffusion EDij / groupe(s) Gn d'identifiant(s) de diffusion IDnm), chaque équipement de diffusion EDij ne diffuse que chaque contenu multimédia Ck qui est associé à un groupe Gn d'identifiant(s) de diffusion IDnm qui est identique à un groupe Gn d'identifiant(s) de diffusion IDnm qui lui a été affecté.

La sélection des contenus multimédia Ck qui doivent être diffusés par chaque équipement de diffusion EDij peut se faire soit de façon centralisée dans le dispositif de gestion D, soit de façon distribuée dans chaque équipement de diffusion EDij.

On va tout d'abord décrire le mode centralisé. Dans ce cas, le dispositif D comprend de préférence un module de programmation MP chargé de sélectionner pour chaque équipement de diffusion EDij (appartenant à un client) chaque contenu multimédia Ck associé à un groupe Gn d'identifiant (s) de diffusion IDnm qui est identique à un groupe Gn d'identifiant(s) de diffusion IDnm qui lui a été affecté.

Afin que le module de programmation MP puisse effectuer cette sélection, le module de gestion MG constitue par exemple une table de correspondance TC entre des identifiants de contenus multimédia ICk et des groupes Gn d'identifiant(s) de diffusion IDnm. Cette constitution (ou planification) est de préférence effectuée par un technicien en fonction d'instructions fournies par chacun des clients. Elle se fait par exemple par renseignement de champs dédiés et/ou sélection de menus qui s'affichent sur des pages de programmation d'un écran de l'équipement de gestion EG. On peut ainsi envisager que chaque client effectue pour chaque groupe constitué de l'un au moins de ses équipements de diffusion EDij une sélection de contenus multimédia Ck parmi un ensemble de contenus multimédia Ck (mis à sa disposition par l'administrateur ou qui lui appartiennent et disposant chacun d'un identifiant de contenu ICk), afin de constituer des séquences de contenu(s) multimédia (représentées par des séquences d'identifiants de contenus ICk), puis qu'il établisse la programmation de la diffusion de chaque contenu multimédia Ck de chaque séquence qu'il a constituée pour chacun de ses équipements de diffusion EDij ou pour chaque groupe d'équipement(s) de diffusion EDij.

On notera que la sélection peut par exemple reposer sur un ou plusieurs critères CRn. Ainsi, un client peut décider que chaque équipement de diffusion EDij implanté dans un lieu situé dans le nord d'un pays devra diffuser le contenu C1 (IC1) à certains moments et le contenu C3 (IC3) à d'autres moments. En variante, un client peut décider que chaque équipement de diffusion EDij implanté dans une vitrine d'un lieu (ou local) situé dans le sud d'un pays devra diffuser le contenu C2 (IC2) à certains moments et le contenu C4 (IC4) à d'autres moments, tandis que chaque équipement de diffusion EDij implanté dans un lieu de passage d'un local situé dans le sud de ce même pays devra diffuser le contenu C1 (IC1) à certains moments et le contenu C3 (IC3) à d'autres moments. Tout type de programmation peut être envisagé.

Chaque séquence programmée est par exemple associée à chaque identifiant de communication (par exemple l'adresse IP) de chaque équipement de diffusion EDij qui doit la diffuser.

Lorsque le module de gestion MG du dispositif D dispose, d'une part, des identifiants ICk de tous les contenus multimédia Ck devant (ou pouvant) être transmis aux équipements de diffusion EDij des différents clients, et d'autre part, des affectations (équipements de diffusion EDij / groupe(s) Gn d'identifiant(s) de diffusion IDnm), il est alors en mesure de constituer la table de correspondance TC entre les différents identifiants de contenus multimédia ICk et des groupes Gn d'identifiant(s) de diffusion IDnm.

La table de correspondance TC est par exemple stockée dans des moyens de stockage du dispositif D, qui peut être réalisée sous n'importe quelle forme, comme par exemple sous la forme d'une mémoire ou d'un registre.

Le module de programmation MP peut alors sélectionner pour chaque équipement de diffusion EDij (de chaque client) chaque contenu multimédia Ck dont l'identifiant de contenu ICk est stocké dans la table TC en correspondance d'un groupe Gn d'identifiant(s) de diffusion IDnm qui est identique à un groupe Gn d'identifiant(s) de diffusion IDnm qui lui a été affecté par le module de gestion MG. Lorsque le module de programmation MP a effectué ses sélections, il peut ordonner à son équipement de gestion EG de transmettre vers chaque équipement de diffusion EDij, à des instants programmés à l'avance (éventuellement compte tenu des programmations définies par chaque client), de chaque contenu multimédia Ck sélectionné pour lui (EDij) afin qu'il le diffuse sur son écran (ou plus généralement son système de visualisation) et/ou ses haut-parleurs (ou tout autre moyen de diffusion sonore), immédiatement ou plus tard compte tenu de la programmation définie.

On va maintenant décrire le mode distribué qui n'est pas selon l'invention. Dans ce cas, la définition des séquences associées à chaque groupe d'équipement(s) de diffusion EDij et la définition des critères à appliquer à chaque groupe d'équipement(s) de diffusion EDij se fait toujours par chaque client, comme dans le cas centralisé. Mais, la sélection de contenus Ck à diffuser se fait localement dans chaque équipement de diffusion EDij. Le dispositif D comprend cependant de préférence un module de programmation MP chargé d'ordonner la transmission d'une partie au moins des contenus multimédia Ck à destination d'au moins une partie des équipements de diffusion EDij à des instants programmés à l'avance (éventuellement compte tenu des programmations définies par chaque client (comme dans le cas centralisé)).

Afin de permettre une sélection locale (distribuée), deux solutions peuvent être envisagées.

Une première solution consiste à adjoindre aux données qui définissent chaque contenu multimédia Ck, au moyen du module de gestion MG, un groupe Gn d'identifiant(s) de diffusion IDnm. Ainsi, chaque contenu multimédia Ck et le groupe Gn d'identifiant(s) de diffusion IDnm qui lui a été adjoint constituent un ensemble de données qui peut être transmis via le réseau RC à certains au moins des équipements de diffusion EDij. Une fois en possession des ensembles de données de contenu transmis (diffusés) via le réseau RC, un équipement de diffusion EDij peut alors sélectionner parmi ces ensembles chaque contenu multimédia Ck auquel a été adjoint un groupe Gn d'identifiant(s) de diffusion IDnm qui est identique à un groupe Gn d'identifiant(s) de diffusion IDnm qui est identique à un groupe Gn d'identifiant(s) de diffusion IDnm qui lui a été affecté. Cette sélection se fait donc au moyen d'une simple comparaison entre chaque groupe Gn d'identifiant(s) de diffusion IDnm contenu dans un ensemble de données reçu et chaque groupe Gn d'identifiant(s) de diffusion IDnm qui lui a été affecté.

On notera que les affectations de groupe(s) Gn d'identifiant(s) de diffusion IDnm sont transmises via le réseau RC aux différents équipements de diffusion concernés par le module de gestion MG du dispositif D.

Une fois la sélection de contenu(s) multimédia Ck effectuée par un équipement de diffusion EDij parmi les ensembles de données reçus, ce dernier est alors en mesure de diffuser chaque contenu multimédia Ck sélectionné sur son écran (ou plus généralement son système de visualisation) et/ou ses haut-parleurs (ou tout autre moyen de diffusion sonore). La diffusion d'un contenu peut se faire immédiatement ou plus tard compte tenu de la programmation définie.

Une seconde solution consiste à utiliser au niveau de chaque équipement de diffusion EDij la table de correspondance TC (identifiants de contenu ICk / groupe(s) Gn d'identifiant(s) de diffusion IDnm) qui a été décrite ci-avant dans le mode centralisé. Cette table TC est construite par le module de gestion MG du dispositif D de la même façon que précédemment, mais elle est maintenant transmise via le réseau RC aux différents équipements de diffusion EDij concernés. Les affectations de groupe(s) Gn d'identifiant(s) de diffusion IDnm sont également transmises via le réseau RC aux différents équipements de diffusion concernés par le module de gestion MG du dispositif D.

Une fois en possession de la table de correspondance TC, un équipement de diffusion EDij peut, chaque fois qu'il reçoit du dispositif D (via le réseau RC) des contenus transmis (diffusés) à certains au moins d'entre eux, sélectionner chaque contenu multimédia Ck reçu dont l'identifiant de contenu ICk est stocké dans la table TC en correspondance d'un groupe Gn d'identifiant(s) de diffusion IDnm qui est identique à un groupe Gn d'identifiant(s) de diffusion IDnm qui lui a été affecté.

Une fois la sélection de contenu(s) multimédia Ck effectuée par un équipement de diffusion EDij parmi les contenus multimédia Ck reçus, ce dernier est alors en mesure de diffuser chaque contenu multimédia Ck sélectionné sur son écran (ou plus généralement son système de visualisation) et/ou ses haut-parleurs (ou tout autre moyen de diffusion sonore). La diffusion d'un contenu peut se faire immédiatement ou plus tard compte tenu de la programmation définie.

Dans le mode distribué, le dispositif D peut faire diffuser par son équipement de gestion EG, vers tous les équipements de diffusion EDij, des ensembles de données ou des contenus multimédia de base, associés respectivement à des groupes Gn d'identifiant(s) de diffusion IDnm spécifiques afin qu'ils les diffusent localement soit par ce qu'on leur a affecté ce(s) groupe(s) Gn d'identifiant(s) de diffusion IDnm spécifique(s), soit par ce qu'ils n'ont pas fait l'objet d'une affectation de groupe(s) Gn d'identifiant(s) de diffusion IDnm. Dans ce dernier cas, le dispositif D doit diffuser (via le réseau RC) vers les équipements de diffusion EDij les groupe(s) Gn d'identifiant(s) de diffusion IDnm spécifique(s), afin qu'ils puissent sélectionner les contenus Ck qui sont associés à l'un d'entre eux, parmi les ensembles de données ou contenus multimédia Ck reçus.

Par ailleurs, dans le mode centralisé comme dans le mode distribué, certains contenus multimédia Ck (associés à un groupe Gn d'identifiant(s) de diffusion IDnm) peuvent être de type interactif, c'est-à-dire être lancés localement grâce à une interaction homme/machine sur l'équipement de diffusion EDij concerné. Tout type d'interaction peut être envisagé, et notamment une action sur une icône affichée sur l'écran (ou plus généralement son système de visualisation) de l'équipement de diffusion EDij lorsqu'il est de type sensitif. Cette icône étant associée à l'identifiant ICk d'un contenu interactif Ck, lorsqu'elle est activée les microprocesseurs de l'équipement de diffusion EDij en sont avertis et ordonnent au lecteur de contenu local de jouer le contenu interactif Ck demandé. Une fois celui-ci intégralement diffusé (ou s'il est interrompu par une nouvelle interaction homme/machine ou abandonné par défaut d'action de l'utilisateur qui l'a activé), on peut par exemple revenir au début de la séquence de contenus à diffuser dont il fait partie afin de recommencer la diffusion des contenus de cette séquence, ou bien passer à la diffusion du contenu qui le suit dans la séquence dont il fait partie.

Il est important de noter que l'on peut envisager un mode de fonctionnement dans lequel les séquences de contenus à diffuser sont transmises à l'avance aux équipements de diffusion en vue d'être diffusées ultérieurement en fonction d'une programmation définie par chaque client pour ses différents groupes d'équipement(s) de diffusion EDij. Dans ce cas, les contenus sélectionnés pour un équipement de diffusion EDij sont stockés localement jusqu'à ce qu'ils soient remplacés par de nouveaux contenus et ils sont diffusés localement en fonction de la programmation locale imposée.

On notera par ailleurs, que l'on peut envisager un mode de fonctionnement de l'installation dans lequel coexistent à la fois des séquences de contenus qui sont tous de base et des séquences de contenus qui comprennent un panachage de contenus de base et de contenus qui ne sont pas de base.

Le dispositif de gestion D selon l'invention, et notamment son module de gestion MG et son module de programmation MP sont de préférence réalisés sous la forme de modules logiciels (ou informatiques), ou d'une combinaison de circuits électroniques et de logiciels. Mais, ils pourraient être également réalisés sous la forme de circuits électroniques.

Par ailleurs, l'invention peut être également considérée sous la forme d'un procédé de gestion de la diffusion de contenus multimédia. Ce procédé pouvant être mis en oeuvre par une installation de communication du type de celle présentée ci-avant, en référence à l'unique figure, seules sont mentionnées ci-dessous ses étapes principales.

Le procédé selon l'invention consiste :
- à associer des groupes Gn d'au moins un identifiant de diffusion IDnm à des contenus multimédia Ck à diffuser,
- à affecter à certains au moins des équipements de diffusion EDij au moins l'un des groupes Gn d'identifiant(s) de diffusion IDnm, et
- à diffuser au niveau d'un équipement de diffusion EDij chaque contenu multimédia qui est associé à un groupe Gn d'identifiant(s) de diffusion IDnm identique à un groupe Gn d'identifiant (s) de diffusion IDnm qui lui a été affecté.

L'invention ne se limite pas aux modes de réalisation de dispositif de gestion de la diffusion de contenus multimédia et procédé de gestion de la diffusion de contenus multimédia décrits ci-avant, seulement à titre d'exemple, mais elle englobe toutes les variantes que pourra envisager l'homme de l'art dans le cadre des revendications ci-après.

## Revendications

1. Dispositif (D) de gestion de la diffusion de contenus multimédia par des équipements de diffusion (EDij) connectés à un réseau de communication (RC) adapté à la transmission de données de contenus multimédia, ledit dispositif (D) étant destiné à faire partie d'un équipement de gestion (EG) connecté audit réseau de communication (RC), comprenant des moyens de gestion (MG) agencés i) pour associer des groupes d'au moins un identifiant de diffusion à des contenus multimédia à diffuser, et ii) pour affecter à certains au moins desdits équipements de diffusion (EDij) au moins l'un desdits groupes d'identifiant(s) de diffusion, de sorte que chaque équipement de diffusion (EDij) ne diffuse que chaque contenu multimédia qui est associé à un groupe d'identifiant(s) de diffusion identique à un groupe d'identifiant(s) de diffusion qui lui a été affecté, **caractérisé en ce qu'**il comprend des moyens de programmation (MP) agencés pour sélectionner pour chaque équipement de diffusion (EDij) chaque contenu multimédia associé à un groupe d'identifiant(s) de diffusion identique à un groupe d'identifiant(s) de diffusion qui lui a été affecté, et pour ordonner la transmission vers chaque équipement de diffusion (EDij), à des instants programmés à l'avance, de chaque contenu multimédia sélectionné pour lui afin qu'il le diffuse.

2. Dispositif selon la revendication 1, **caractérisé en ce que** lesdits moyens de gestion (MG) sont agencés pour constituer une table de correspondance entre des identifiants de contenus multimédia et des groupes d'identifiant(s) de diffusion, et **en ce que** lesdits moyens de programmation (MP) sont agencés pour sélectionner pour chaque équipement de diffusion (EDij) chaque contenu multimédia dont l'identifiant de contenu est stocké dans ladite table en correspondance d'un groupe d'identifiant(s) de diffusion identique à un groupe d'identifiant(s) de diffusion qui lui a été affecté, et pour ordonner la transmission vers chaque équipement de diffusion (EDij), à des instants programmés à l'avance, de chaque contenu multimédia sélectionné pour lui afin qu'il le diffuse.

3. Dispositif selon la revendication 1 ou 2, **caractérisé en ce que** certains identifiants de diffusion sont associés à des contenus multimédia, dits de base, devant être diffusés par défaut par un équipement de diffusion (EDij) n'ayant pas fait l'objet d'une affectation de groupe d'identifiant(s) de diffusion.

4. Dispositif selon l'une des revendications 1 à 3, **caractérisé en ce que** chaque identifiant de diffusion est représentatif d'une « valeur » choisie parmi un ensemble de valeurs pouvant être prises par un critère.

5. Dispositif selon la revendication 4, **caractérisé en ce que** chaque critère est choisi dans un groupe comprenant au moins la zone géographique d'implantation d'un équipement de diffusion (EDij) et le positionnement dans une vitrine des moyens de diffusion d'un équipement de diffusion (EDij).

6. Dispositif selon l'une des revendications 1 à 5, **caractérisé en ce que** certains au moins desdits contenus multimédia associés à un groupe d'identifiant(s) de diffusion sont destinés à être diffusés par un équipement de diffusion (EDij) consécutivement à une interaction homme/machine.

7. Dispositif selon l'une des revendications 1 à 6, **caractérisé en ce que** lesdits moyens de programmation (MP) sont agencés pour constituer des séquences de contenus multimédia à diffuser comprenant chacune au moins un contenu multimédia associé à un groupe d'identifiant(s) de diffusion et au moins un contenu multimédia non associé à un groupe d'identifiant(s) de diffusion, ce dernier contenu multimédia étant destiné à être obligatoirement diffusé par chaque équipement de diffusion (EDij) qui le reçoit.

8. Procédé de gestion de la diffusion de contenus multimédia par des équipements de diffusion (EDij) connectés à un réseau de communication (RC) adapté à la transmission de données de contenus multimédia, qui consiste i) à associer des groupes d'au moins un identifiant de diffusion à des contenus multimédia à diffuser, ii) à affecter à certains au moins desdits équipements de diffusion (EDij) au moins l'un desdits groupes d'identifiant(s) de diffusion, et iii) à diffuser au niveau d'un équipement de diffusion (EDij) chaque contenu multimédia qui est associé à un groupe d'identifiant(s) de diffusion identique à un groupe d'identifiant(s) de diffusion qui lui a été affecté, **caractérisé en ce que** l'on sélectionne, par des moyens de programmation (MP), pour chaque équipement de diffusion (EDij) chaque contenu multimédia associé à un groupe d'identifiant(s) de diffusion identique à un groupe d'identifiant(s) de diffusion qui lui a été affecté, et on ordonne, par les moyens de programmation (MP), de transmettre, vers chaque équipement de diffusion (EDij), à des instants programmés à l'avance, chaque contenu multimédia sélectionné pour lui afin qu'il le diffuse.

9. Procédé selon la revendication 8, **caractérisé en ce que** l'on constitue, par des moyens de gestion (MG), une table de correspondance entre des identifiants de contenus multimédia et des groupes d'identifiant(s) de diffusion, et **en ce que** l'on sélectionne, par les moyens de programmation (MP), pour chaque équipement de diffusion (EDij) chaque contenu multimédia dont l'identifiant de contenu est stocké dans ladite table en correspondance d'un groupe d'identifiant(s) de diffusion identique à un groupe d'identifiant(s) de diffusion qui lui a été affecté, et on ordonne, par les moyens de programmation (MP), de transmettre, vers chaque équipement de diffusion (EDij), à des instants programmés à l'avance, chaque contenu multimédia sélectionné pour lui afin qu'il le diffuse.

10. Procédé selon la revendication 8 ou 9, **caractérisé en ce que** certains identifiants de diffusion sont associés à des contenus multimédia, dits de base, devant être diffusés par défaut par un équipement de diffusion (EDij) n'ayant pas fait l'objet d'une affectation de groupe d'identifiant(s) de diffusion.

11. Procédé selon l'une des revendications 8 à 10, **caractérisé en ce que** chaque identifiant de diffusion est représentatif d'une « valeur » choisie parmi un ensemble de valeurs pouvant être prises par un critère.

12. Procédé selon la revendication 11, **caractérisé en ce que** chaque critère est choisi dans un groupe comprenant au moins la zone géographique d'implantation d'un équipement de diffusion (EDij) et le positionnement dans une vitrine des moyens de diffusion d'un équipement de diffusion (EDij).

13. Procédé selon l'une des revendications 8 à 12, **caractérisé en ce que** certains au moins desdits contenus multimédia associés à un groupe d'identifiant(s) de diffusion sont destinés à être diffusés par un équipement de diffusion (EDij) consécutivement à une interaction homme/machine.

14. Procédé selon l'une des revendications 8 à 13, **caractérisé en ce que** l'on constitue, par les moyens de programmation (MP), des séquences de contenus multimédia à diffuser comprenant chacune au moins un contenu multimédia associé à un groupe d'identifiant(s) de diffusion et au moins un contenu multimédia non associé à un groupe d'identifiant(s) de diffusion, ce dernier contenu multimédia étant destiné à être obligatoirement diffusé par chaque équipement de diffusion (EDij) qui le reçoit.

## Patentansprüche

1. Vorrichtung (D) zur Handhabung der Verteilung von Multimediainhalten durch Verteilungsausrüstungen (EDij), die an ein Kommunikationsnetz (RC) angeschlossen sind, das zur Übertragung von Daten von Multimediainhalten ausgelegt ist, wobei die Vorrichtung (D) als Teil einer an das Kommunikationsnetz (RC) angeschlossenen Ausrüstung zur Handhabung (EG) dient, umfassend Handhabungsmittel (MG), die eingerichtet sind, i) um Gruppen von mindestens einem Verteilungsidentifikator mit zu verteilenden Multimediainhalten zu verknüpfen, und ii) um mindestens einige der Verteilungsausrüstungen (EDij) mindestens einer der Gruppen von Verteilungsidentifikator(en) zuzuordnen, derart dass jede Verteilungsausrüstung (EDij) nur jeden Multimediainhalt verteilt, der mit einer Gruppe von Verteilungsidentifikator(en) verknüpft ist, die mit einer Gruppe von Verteilungsidentifikator(en) identisch ist, die ihr zugeordnet worden ist, **dadurch gekennzeichnet, dass** sie Programmiermittel (MP) umfasst, die dazu eingerichtet sind, für jede Verteilungsausrüstung (EDij) jeden Multimediainhalt auszuwählen, der mit einer Gruppe von Verteilungsidentifikator(en) verknüpft ist, die mit einer Gruppe von Verteilungsidentifikator(en) identisch ist, die ihr zugeordnet worden ist, und den Befehl zur Übertragung auf jede Verteilungsausrüstung (EDij) bei zuvor programmierten Instanzen jedes für sie ausgewählten Multimediainhalts zu geben, damit sie ihn verteilt.

2. Vorrichtung nach Anspruch 1, **dadurch gekennzeichnet, dass** die Handhabungsmittel (MG) dazu eingerichtet sind, eine Entsprechungstabelle zwischen Identifikatoren von Multimediainhalten und Gruppen von Verteilungsidentifikator(en) zu erstellen, und dadurch, dass die Programmiermittel (MP) dazu eingerichtet sind, für jede Verteilungsausrüstung (EDij) jeden Multimediainhalt auszuwählen, dessen Inhaltsidentifikator in der Entsprechungstabelle einer Gruppe von Verteilungsidentifikator(en) gespeichert ist, die mit einer Gruppe von Verteilungsidentifikator(en) identisch ist, die ihr zugeordnet worden ist, und den Befehl für die Übertragung auf jede Verteilungsausrüstung (EDij) bei zuvor programmierten Instanzen jedes für sie ausgewählten Multimediainhalts zu geben, damit sie ihn verteilt.

3. Vorrichtung nach Anspruch 1 oder 2, **dadurch gekennzeichnet, dass** einige Verteilungsidentifikatoren mit Multimediainhalten, einer sogenannten Basis, verknüpft sind, die standardmäßig durch eine Verteilungsausrüstung (EDij) verteilt werden müssen, die nicht Gegenstand einer Gruppenverknüpfung von Verteilungsidentifikator(en) gewesen sind.

4. Vorrichtung nach einem der Ansprüche 1 bis 3, **dadurch gekennzeichnet, dass** jeder Verteilungsidentifikator repräsentativ ist für einen "Wert", der aus einer Gesamtheit von Werten ausgewählt ist, die von einem Kriterium übernommen werden können.

5. Vorrichtung nach Anspruch 4, **dadurch gekennzeichnet, dass** jedes Kriterium aus einer Gruppe ausgewählt ist, umfassend mindestens das geografische Gebiet, in dem sich eine Verteilungsausrüstung (EDij) befindet, und die Positionierung in einem Anzeigebereich der Verteilungsmittel einer Verteilungsausrüstung (EDij).

6. Vorrichtung nach einem der Ansprüche 1 bis 5, **dadurch gekennzeichnet, dass** mindestens einige der Multimediainhalte, die mit einer Gruppe von Verteilungsidentifikator(en) verknüpft sind, zur Verteilung durch eine Verteilungsausrüstung (EDij) im Anschluss an eine Mensch/Maschine-Interaktion dienen.

7. Vorrichtung nach einem der Ansprüche 1 bis 6, **dadurch gekennzeichnet, dass** die Programmiermittel (MP) dazu eingerichtet sind, Sequenzen von zu verteilenden Multimediainhalten aufzustellen, umfassend jeweils mindestens einen Multimediainhalt, der mit einer Gruppe von Verteilungsidentifikator(en) verknüpft ist, und mindestens einen Multimediainhalt, der nicht mit einer Gruppe von Verteilungsidentifikator(en) verknüpft ist, wobei letzterer Multimediainhalt dazu dient, obligatorisch durch jede Verteilungsausrüstung (EDij), die ihn empfängt, verteilt zu werden.

8. Verfahren zur Handhabung der Verteilung von Multimediainhalten durch Verteilungsausrüstungen (EDij), die an ein Kommunikationsnetz (RC) angeschlossen sind, das zur Übertragung von Daten von Multimediainhalten ausgelegt ist, das besteht aus i) Verknüpfen von Gruppen von mindestens einem Verteilungsidentifikator mit zu verteilenden Multimediainhalten, ii) Zuordnen von mindestens einer der Gruppen von Verteilungsidentifikator(en) zu mindestens einigen der Verteilungsausrüstungen (EDij), und iii) Verteilen an einer Verteilungsausrüstung (EDij) jedes Multimediainhalts, der mit einer Gruppe von Verteilungsidentifikator(en) verknüpft ist, die mit einer Gruppe von Verteilungsidentifikator(en) identisch ist, die ihr zugeordnet worden ist, **dadurch gekennzeichnet, dass** durch Programmiermittel (MP) für jede Verteilungsausrüstung (EDij) jeder Multimediainhalt ausgewählt wird, der mit einer Gruppe von Verteilungsidentifikator(en) verknüpft ist, die mit einer Gruppe von Verteilungsidentifikator(en) identisch ist, die ihr zugeordnet worden ist, und durch die Programmiermittel (MP) der Befehl gegeben wird, auf jede Verteilungsausrüstung (EDij) bei zuvor programmierten Instanzen jeden für sie ausgewählten Multimediainhalt zu übertragen, damit sie ihn verteilt.

9. Verfahren nach Anspruch 8, **dadurch gekennzeichnet, dass** durch Handhabungsmittel (MG) eine Entsprechungstabelle zwischen Identifikatoren von Multimediainhalten und Gruppen von Verteilungsidentifikator(en) erstellt wird, und dadurch, dass durch die Programmiermittel (MP) für jede Verteilungsausrüstung (EDij) jeder Multimediainhalt ausgewählt wird, dessen Inhaltsidentifikator in der Entsprechungstabelle einer Gruppe von Verteilungsidentifikator(en) gespeichert ist, die mit einer Gruppe von Verteilungsidentifikator(en) identisch ist, die ihr zugeordnet worden ist, und durch die Programmiermittel (MP) der Befehl gegeben wird, auf jede Verteilungsausrüstung (EDij) bei zuvor programmierten Instanzen jeden für sie ausgewählten Multimediainhalt zu übertragen, damit sie ihn verteilt.

10. Verfahren nach Anspruch 8 oder 9, **dadurch gekennzeichnet, dass** einige Verteilungsidentifikatoren mit Multimediainhalten, einer sogenannten Basis, verknüpft sind, die standardmäßig durch eine Verteilungsausrüstung (EDij) verteilt werden müssen, die nicht Gegenstand einer Gruppenverknüpfung von Verteilungsidentifikator(en) gewesen sind.

11. Verfahren nach einem der Ansprüche 8 bis 10, **dadurch gekennzeichnet, dass** jeder Verteilungsidentifikator repräsentativ ist für einen "Wert", der aus einer Gesamtheit von Werten ausgewählt ist, die von einem Kriterium übernommen werden können.

12. Verfahren nach Anspruch 11, **dadurch gekennzeichnet, dass** jedes Kriterium aus einer Gruppe ausgewählt ist, umfassend mindestens das geografische Gebiet, in dem sich eine Verteilungsausrüstung (EDij) befindet, und die Positionierung in einem Anzeigebereich der Verteilungsmittel einer Verteilungsausrüstung (EDij).

13. Verfahren nach einem der Ansprüche 8 bis 12, **dadurch gekennzeichnet, dass** mindestens einige der Multimediainhalte, die mit einer Gruppe von Verteilungsidentifikator(en) verknüpft sind, zur Verteilung durch eine Verteilungsausrüstung (EDij) im Anschluss an eine Mensch/Maschine-Interaktion dienen.

14. Verfahren nach einem der Ansprüche 8 bis 13, **dadurch gekennzeichnet, dass** durch die Programmiermittel (MP) Sequenzen von zu verteilenden Multimediainhalten aufgestellt werden, umfassend jeweils mindestens einen Multimediainhalt, der mit einer Gruppe von Verteilungsidentifikator(en) verknüpft ist, und mindestens einen Multimediainhalt, der nicht mit einer Gruppe von Verteilungsidentifikator(en) verknüpft ist, wobei letzterer Multimediainhalt dazu dient, obligatorisch durch jede Verteilungsausrüstung (EDij), die ihn empfängt, verteilt zu werden.

## Claims

1. Device (D) for managing the broadcast of multimedia contents by pieces of broadcasting equipment (EDij) connected to a communication network (RC) suitable for transmitting multimedia-content data, said device (D) being intended to form part of a piece of managing equipment (EG) that is connected to said communication network (RC), comprising managing means (MG) arranged i) to associate groups of at least one broadcasting identifier with multimedia contents to be broadcast, and ii) to assign to certain at least of said pieces of broadcasting equipment (EDij) at least one of said groups of one or more broadcasting identifiers, so that each piece of broadcasting equipment (EDij) broadcasts only each multimedia content that is associated with a group of one or more broadcasting identifiers identical to a group of one or more broadcasting identifiers that has been assigned thereto, **characterized in that** it comprises programming means (MP) arranged to select, for each piece of broadcasting equipment (EDij), each multimedia content associated with a group of one or more broadcasting identifiers identical to a group of one or more broadcasting identifiers that has been assigned thereto, and to order the transmission to each piece of broadcasting equipment (EDij), at times programmed in advance, of each multimedia content selected therefor in order that it broadcast it.

2. Device according to Claim 1, **characterized in that** said managing means (MG) are arranged to form a table giving the correspondence between identifiers of multimedia contents and groups of one or more broadcasting identifiers, and **in that** said programming means (MP) are arranged to select, for each piece of broadcasting equipment (EDij), each multimedia content the content identifier of which is stored in said table in correspondence with a group of one or more broadcasting identifiers identical to a group of one or more broadcasting identifiers that has been assigned thereto, and to order the transmission, to each piece of broadcasting equipment (EDij), at times programmed in advance, of each multimedia content selected therefor in order that it broadcast it.

3. Device according to Claim 1 or 2, **characterized in that** certain broadcasting identifiers are associated with multimedia contents, called basic multimedia contents, that are required to be broadcast by default by a piece of broadcasting equipment (EDij) that has not been assigned a group of one or more broadcasting identifiers.

4. Device according to one of Claims 1 to 3, **characterized in that** each broadcasting identifier is representative of a "value" chosen from a set of values able to be taken by a criterion.

5. Device according to Claim 4, **characterized in that** each criterion is chosen from a group comprising at least the geographical zone of installation of a piece of broadcasting equipment (EDij) and the position in a window display of the broadcasting means of a piece of broadcasting equipment (EDij).

6. Device according to one of Claims 1 to 5, **characterized in that** certain at least of said multimedia contents associated with a group of one or more broadcasting identifiers are intended to be broadcast by a piece of broadcasting equipment (EDij) consecutively to a human/machine interaction.

7. Device according to one of Claims 1 to 6, **characterized in that** said programming means (MP) are arranged to form sequences of multimedia contents to be broadcast, each sequence comprising at least one multimedia content associated with a group of one or more broadcasting identifiers and at least one multimedia content not associated with a group of one or more broadcasting identifiers, the latter multimedia content being intended to be necessarily broadcast by each piece of broadcasting equipment (EDij) that receives it.

8. Method for managing the broadcast of multimedia contents by pieces of broadcasting equipment (EDij) connected to a communication network (RC) suitable for transmitting multimedia-content data, which consists i) in associating groups of at least one broadcasting identifier with multimedia contents to be broadcast, ii) in assigning to certain at least of said pieces of broadcasting equipment (EDij) at least one of said groups of one or more broadcasting identifiers, and iii) in broadcasting from a piece of broadcasting equipment (EDij) each multimedia content that is associated with a group of one or more broadcasting identifiers identical to a group of one or more broadcasting identifiers that has been assigned thereto, **characterized in that**, for each piece of broadcasting equipment (EDij), each multimedia content associated with a group of one or more broadcasting identifiers identical to a group of one or more broadcasting identifiers that has been assigned thereto is selected with the programming means (MP), and the programming means (MP) are used to order the transmission, to each piece of broadcasting equipment (EDij), at times programmed in advance, of each multimedia content selected therefor in order that it broadcast it.

9. Method according to Claim 8, **characterized in that** a table giving the correspondence between identifiers of multimedia contents and groups of one or more broadcasting identifiers is formed with the managing means (MG), and **in that**, for each piece of broadcasting equipment (EDij), each multimedia content the content identifier of which is stored in said table in correspondence with a group of one or more broadcasting identifiers identical to a group of one or more broadcasting identifiers that has been assigned thereto is selected by the programming means (MP), and the programming means (MP) are used to order the transmission, to each piece of broadcasting equipment (EDij), at times programmed in advance, of each multimedia content selected therefor in order that it broadcast it.

10. Method according to Claim 8 or 9, **characterized in that** certain broadcasting identifiers are associated with multimedia contents, called basic multimedia contents, that are required to be broadcast by default by a piece of broadcasting equipment (EDij) that has not been assigned a group of one or more broadcasting identifiers.

11. Method according to one of Claims 8 to 10, **characterized in that** each broadcasting identifier is representative of a "value" chosen from a set of values able to be taken by a criterion.

12. Method according to Claim 11, **characterized in that** each criterion is chosen from a group comprising at least the geographical zone of installation of a piece of broadcasting equipment (EDij) and the position in a window display of the broadcasting means of a piece of broadcasting equipment (EDij).

13. Method according to one of Claims 8 to 12, **characterized in that** certain at least of said multimedia contents associated with a group of one or more broadcasting identifiers are intended to be broadcast by a piece of broadcasting equipment (EDij) consecutively to a human/machine interaction.

14. Method according to one of Claims 8 to 13, **characterized in that** the programming means (MP) are used to form sequences of multimedia contents to be broadcast, each sequence comprising at least one multimedia content associated with a group of one or more broadcasting identifiers and at least one multimedia content not associated with a group of one or more broadcasting identifiers, the latter multimedia content being intended to be necessarily broadcast by each piece of broadcasting equipment (EDij) that receives it.
